# EUROPEAN PATENT APPLICATION

(11) **EP 3 667 061 A1**
(43) Date of publication of application: **17.06.2020**
(21) Application number: 18212367.9
(22) Date of filing: 13.12.2018
(51) Int. Cl.: F03D 7/02, F03D 1/06

(54) **ADAPTABLE SPOILER FOR A WIND TURBINE ROTOR BLADE**

(71) Applicant: Siemens Gamesa Renewable Energy A/S, 7330 Brande (DK)
(72) Inventor: The designation of the inventor has not yet been filed
(74) Representative: Aspacher, Karl-Georg

(57) **Abstract**

It is described a spoiler (150), in particular adaptable spoiler, for a wind turbine blade (100), comprising: a main body (153) comprising an airfoil shaped surface (155) to be exposed to air flow (161); at least one stiffening element (159) distinct from the main body and supporting the airfoil surface, wherein the stiffening element (159) is in particular configured to enforce the shape of the airfoil surface (155) during loading by wind during operation of the wind turbine.

## Description

### Field of invention

The present invention relates to a spoiler, in particular an adaptable spoiler, for a wind turbine blade of a wind turbine and further relates to a rotor blade of a wind turbine comprising the spoiler.

### Art Background

A wind turbine rotor blade may have installed a flow regulating device on its surface. An example of such a flow regulating device is a vortex generator (VG). The rotor blade may further comprise a spoiler installed at the rotor blade surface. The spoiler may act in concert with the vortex generator and may influence the effect of the vortex generator depending on the state of the spoiler. The state of the spoiler may relate to a protrusion height and/or tilt angle by which the spoiler extends from or is angularly tilted relative to other surface portions of the rotor blade. The spoiler can be used to actively suppress the function of the flow regulating device. In general, a flow regulating device may be considered to comprise a device which is capable of, in certain conditions, enhancing the lift coefficient of the airfoil section, for example by increasing the level of energy of the boundary layer of the rotor blade.

EP 1 623 111 B1 discloses a wind turbine blade including adjustable lift-regulating means arranged on or at the surface of the wind turbine blade and extending in the longitudinal direction of the blade and an activation means by which the lift-regulating means can be adjusted and thus alter the aerodynamic properties of the blade. The lift-regulating means comprise one or more flexible flaps.

US 8 851 840 B2 discloses a wind turbine blade comprising a blade body and a device for modifying the aerodynamic surface or shape of the blade, wherein a pneumatic actuator controls the position and/or movement of the device, wherein a pressure chamber positioned within the blade body is present. The pressure chamber may be pressurized thereby changing the state of the device, thereby modifying the aerodynamic surface or shape of the blade.

US 5 106 265 A discloses a wind turbine wing comprising a pneumatically actuated spoiler movable perpendicular to an airstream.

WO 2018/041420 disclose a rotor blade comprising an aerodynamic device for influencing the air flow flowing from the leading edge section of the rotor blade to the trailing edge section of the rotor blade, wherein the aerodynamic device is mounted at a surface of the rotor blade and comprises a pneumatic or hydraulic actuator, such as a hose or a cavity of which the volume depends on the pressure of the fluid being present inside the pneumatic or hydraulic actuator.

It has however been observed that conventional spoilers do not provide in all circumstances a sufficient or reasonable performance, in order to actively change the state for example of a downstream installed flow regulating device, such as a vortex generator. Furthermore, it has been observed that a conventional spoiler does not withstand in all situations the load it is subjected to, leading to partial damage or at least reduction of the lifetime of the spoiler.

Thus, there may be a need for a spoiler, in particular an adaptable spoiler and there may be a need for a rotor blade, wherein lifetime can be increased and performance can be increased. In particular, there may be a need for a spoiler and a rotor blade comprising the spoiler, wherein actively changing the influence of a downstream installed flow regulating device can be performed in a reliable and accurate manner.

### Summary of the Invention

This need may be met by the subject matter according to the independent claims. Advantageous embodiments of the present invention are described by the dependent claims.

Embodiments of the present invention employ a reinforcement element (also referred to as stiffening element), in particular made of a creep-resistant material, for example fibre reinforced plastic. The reinforcement element may guarantee a constant stiffness throughout the lifetime. When this reinforcement element is comprised within the spoiler, the rigidity of the spoiler is improved and the performance of the spoiler may be improved due to the reinforcement of the spoiler, maintaining its intended shape.

According to an embodiment of the present invention, it is provided a spoiler, in particular adaptable spoiler, for a wind turbine blade, comprising: a main body (e.g. integrally formed) comprising an (e.g. aerodynamic active) airfoil shaped surface to be exposed to air flow; at least one stiffening element distinct from the main body and supporting (and e.g. stiffening) the airfoil surface, wherein the stiffening element is in particular configured to enforce the shape of the airfoil surface during loading by wind during operation of the wind turbine.

The main body may be homogenous and integrally formed from one material or a composite of materials, such as a synthetic or plastic material. The spoiler may be installable at a suction surface of the rotor blade, in a location between e.g. 15% to 60% of the chordwise position measured from the leading edge to the trailing edge. The spoiler may be installable along the full span of the blade, from root to tip, but preferably in the area between 25% and 85% of the blade length measured from the root towards the tip. The spoiler may be furthermore installed in individual pieces interconnected with each other, forming a long section which can be activated collectively. The spoiler may be installed such that it comprises independent sections which are activated independently from each other. E.g., the spoiler may comprise spoiler elements that are not connected but activated collectively. The airfoil shaped surface is the aerodynamically active surface intended to be exposed to the air flow during normal operation of the wind turbine, the airfoil shaped surface in particular extending by tilt and/or protrusion from a surrounding surface of the wind turbine blade.

The spoiler may be an adaptable spoiler, which means that the position and/or orientation, in particular protrusion height and tilt of the airfoil shaped surface is changeable, for example by using a pneumatic or hydraulic system configured to inflate and/or deflate and/or pressurize a bag or a hose upon which the orientation and/or position of the airfoil shaped surface is changed. The spoiler may in particular be configured to deflect an air flow away from the surface of the rotor blade, i.e. causing the airflow to stall. The degree or effectiveness of deflection or in general influence on the air flow may depend on the state of the spoiler, for example a degree of protrusion and/or a degree of tilt.

The stiffening element (also referred to as enforcement element) is an element distinct from (e.g. separable from, but e.g. assembled with) the main body or which may be separated from the main body and which may comprise material different from the material of which the main body is composed. The installed stiffening element may ensure that the intended shape of the airfoil surface is preserved during operation, in particular during load due to wind impact onto the airfoil shaped surface. The stiffening element may also ensure that, when the spoiler is not activated, it is pressing against the surface of the blade with a minimum force, such that the air flow cannot lift it from the surface unintentionally. The main body as well as the stiffening element may extend along the longitudinal axis of the rotor blade to a larger extent than perpendicular thereto. The stiffening element may be, in particular replaceably, installed within or at (e.g. one or more portions of) the main body not exposed to the air flow. No bolts or metal elements may be necessary for installing the stiffening element at or within the main body.
The stiffening element is separable from the main body and distinct from the airfoil shaped surface (of the main body) and may be replaced.

The spoiler may in particular be employed in combination with a flow-regulating device, such as a vortex generator or a flap (for example installed directly behind (e.g. in a flow direction downstream) the spoiler, or alternatively at a distance behind the spoiler).

The vortex generator(s) may e.g. be installed on wind turbine blades in the inboard section of a rotor blade in order to increase the angle of attack of the airfoils at which flow separation or stall occurs. Furthermore, vortex generators may also be employed in the mid span or outboard sections. Vortex generators may be placed on the suction side of the blade and in the fore portion of the airfoil. Common location range from 15% to 55% of the chord (measured from the leading edge). The vortex generators may be partially or completely submerged within the boundary layer of the airfoil flow and may increase the energy level behind the boundary layer behind them. The effect of this is a delay, i.e. occurring at higher angles of attack, of the onset of separation of the boundary layer and of the point of stall. This may be a desired effect in the inboard sections of an airfoil during normal production, but might be an unwanted or undesired effect in other situations due to the excess levels of loads.

The state of the flow regulating device may be actively changed depending on the state of the spoiler. The state of the flow regulating device, in particular the vortex generator, may be changed from an inactive state (where the flow is not affected by it) to an active state (where the flow is affected by it). Further, the flow around the airfoil sections may be stalled or separated from the blade surface i.e. inducing flow separation or stall) in particular situations or particular states of the spoiler. The spoiler may be adjustable in at least two states, one active and one non-active state.

The spoiler may be configured for usage for a pitch-regulated wind turbine. The combination of a flow-regulation device and a spoiler may be designed to operate between at least two discrete states, for example an active state and an inactive (e.g. deactivated) state. In its active state, the spoiler may act in such a way as to counteract the effect of the flow-regulating device. In its deactivated state, the spoiler may act in such a way as to allow an undisturbed operation of the flow-regulating device. When the flow-regulating device is operating undisturbed, the flow on the surface of the aerodynamic profile (of the rotor blade) remains attached and may lead to higher lift coefficient. When the flow-regulating device has been counteracted in the active state of the spoiler, the flow may tend to separate from the surface of the aerodynamic profile (of the rotor blade) and may lead to both a lower lift coefficient and a higher drag coefficient. In particular, the flow-regulating device/spoiler combination may be used on the suction side of the rotor blade, or on the pressure side of the rotor blade, or on both the pressure as well as on the suction side of the rotor blade.

The stiffening element may ensure that the intended desired shape of the airfoil surface is maintained during loading by wind during normal operation of the wind turbine. The main body may be to some extent elastic, e.g. deformable. The main body may e.g. slightly deform upon assembling the main body and the stiffening element. Furthermore, the stiffening element may enforce and/or support the shape of the airfoil surface in different states of the spoiler if the spoiler is an adaptable spoiler. Thereby a force exerted on the main body (e.g. the airfoil shaped surface of the main body) by the stiffening element may press the main body (or a spoiler extension) against an expandable device.

Thereby, selectively activating or deactivating a potentially downstream installed flow-regulating device, such as a vortex generator, is enabled and performance may be improved.

According to the embodiment of the present invention, the stiffening element is not exposed to an air flow the rotor blade is subjected to. The stiffening element may be installed below the airfoil shaped surface (of the main body) and may not interfere with the desired effect of the airfoil shaped surface. The airfoil shaped surface may be the top surface of the spoiler (facing away from the blade) that interacts directly with the air flow.

According to an embodiment of the present invention, the stiffening element is elastic and/or prebent and/or has a shape of a plane or a curved shape different from a plane.

When the stiffening element is elastic, it may exert an elastic force on one or more regions of the main body, where the stiffening element is installed or with which the stiffening element is in contact. Thereby, an intended shape of the airfoil surface may be established or maintained. Depending on contact regions or contact points at the main body it may be advantageous to design the stiffening element to have a shape of a plane or a curved shape different from a plane. A plane stiffening element may be simple to manufacture.

According to the embodiment of the present invention, the stiffening element is installed in the main body below the airfoil shaped surface of the spoiler, (e.g. between the airfoil surface and remainder of blade surface) and/or the stiffening element is installed buried (e.g. not exposed to air flow) in the main body. When the stiffening element is installed below the airfoil surface or even buried in(side) the main body, the stiffening element does not interfere with the airfoil shaped surface and thus does not interfere with intended air flow across the airfoil shaped surface of the spoiler. Nevertheless, reinforcement of the spoiler in general, in particular for maintaining the intended airfoil shaped surface, may be ensured.

According to an embodiment of the present invention, the main body comprises a single plastic piece or several plastic pieces. Thereby, the main body can be simply manufactured in a cost-effective manner. However, the plastic piece alone may not be strong enough to withstand the load of impacting wind during wind turbine operation and the activation cycles to which it is subjected throughout the lifetime of the turbine. Thus, enforcing the spoiler by the stiffening element may be achieved without obviating from manufacturing the main body from a cost-effective material, such as plastic. The stiffening element may be manufactured from a material or composite of material providing higher strength and stiffness than the material from which the main body is manufactured.

According to an embodiment of the present invention, the main body comprises plural stiffening element contact portions contacting and/or holding the stiffening element by force-fit and/or form-fit, in particular in a biased and/or prestressed manner. Each of the stiffening element contact portions may be shaped in form of a stripe extending in the longitudinal direction of the spoiler (corresponding to that of the rotor blade). The stiffening element may comprise corresponding contact portions with which the stiffening element contacts the contact portions of the main body. In regions between the respective contact portions, the stiffening element may not contact the main body. The main stress acting on the airfoil shaped surface of the main body may be transferred to or into the stiffening element. Thereby the thickness (and weight) of the main body may be reduced and the main body may be formed as a slim structure. Using the plural stiffening element contact portion, the stiffening element may be installed, in particular clamped to the main body without requiring any bolt or metal element for fixation. Thereby, allowing the easy installation and replacement procedure. Furthermore, it allows to choose and insert different stiffening elements of different stiffness levels depending on application.

According to an embodiment of the present invention, the contact portions comprise (at least) three contact portions separated from each other (e.g. in a direction of the air flow, i.e. substantially perpendicular to the longitudinal direction), each in particular extending in the longitudinal direction of the blade to a larger extend than perpendicular thereto, wherein the contact portions are in particular continuous along a longitudinal direction of the spoiler.

The contact portions may comprise a first, a second and a third contact portion, the third contact portion separated from the first and second contact portion to be downstream in an air flow direction, each in particular extending in the longitudinal direction of the blade to a larger extent than perpendicular thereto.

At least three contact portions may enable to properly fix (e.g. clamp) the stiffening element within or at the main body. Thereby, the first and the third of the contact portions of the main body may contact the stiffening element from one side, while the second contact portion may contact the stiffening element from the other side. In particular, the two contact portions of the main body may contact to end edges of the stiffening element and the one contact portion of the main body may contact the stiffening element at an intermediate or central region of the stiffening element. Thereby, a secure fixation of the stiffening element may be achievable. When the contact portions are continuous along the longitudinal direction of the spoiler, a secure fixation may be enabled.

According to an embodiment of the present invention the first and the second contact portion fixedly clamp an upstream portion of the stiffening element, wherein a downstream contact portion of the stiffening element presses to the third contact portion in a direction against a force exerted on the airfoil shaped surface by an expandable device.

According to an embodiment of the present invention, the first and the second contact portions are each part of a respective slit in the main body into which a respective upstream end edge of the stiffening element is at least partially inserted, thereby holding the stiffening element partly by form-fit. The contact portions of the main body may hold the stiffening element entirely by force-fit, or in other embodiments partly by force-fit and partly by form-fit. A form-fit may improve a secure fixation of the stiffening element.

According to an embodiment of the present invention the third contact portion is arranged to allow sliding of the downstream contact portion of the stiffening element relative to the third contact portion of the main body upon inflating or deflating the expandable device, wherein in particular the third contact portion and/or the downstream contact portion of the stiffening element and/or at least a portion of an outer surface of the expandable device comprises low friction elements, in particular stripes. Thereby loads within the main body may be reduced, ensuring an appropriate aero shape and optimized lifetime and lower wear.

According to an embodiment of the present invention, the stiffening element is located: in a central region of the airfoil surface away from the rear end and the front end of the spoiler, or in at least a half or a rear end portion of the spoiler. Thereby, portions of the airfoil shaped surface most important for influencing the air flow may be supported regarding its desired surface shape. The front end of the spoiler may have the highest structural risks, due to the extreme bending, and it may be the purpose of the stiffening element to be able to cope with the stress and strain due to that bending (of the front end of the spoiler or airfoil shaped surface). Structural integrity of the main body may be ensured and creep of the main body material may be reduced.

According to an embodiment of the present invention, the stiffening element comprises a composite comprising: a fibre material and thermoplastic and/or thermosetting material, the fibre material in particular comprising at least one of: glass fibre and/or carbon fibre and/or Kevlar and/or natural fibre, the thermoplastic and/or thermosetting material in particular comprising at least one of: epoxy, polyester, vinylester, resin, or any other suitable thermosetting resin, or POM, Polyamid, ABS, ASA, SAN, PC, or other suitable thermoplastic materials. Thereby, the stiffening element may be manufactured from conventionally known material. Thereby, manufacturing may be simplified.

According to an embodiment of the present invention, the spoiler further comprises a hose or a bag, inflatable with fluid (e.g. air) and arranged to change shape and/or position and/or orientation and/or tilt of the spoiler airfoil surface, thereby providing an adaptable spoiler. Thereby, a conventional adaptable spoiler is supported by embodiments of the present invention. Inflating the hose or bag with (compressed) air may change the protrusion height and/or tilt of the airfoil shaped surface of the spoiler and thus may establish different activation states of the spoiler. The activation states or general states of the spoiler may in turn influence the effect of a potentially downstream installed flow-regulating device, thus may set the flow-regulating device in an inactive or an active state.

According to an embodiment of the present invention, the spoiler further comprises a further stiffening element, in particular exposed to the air flow and arranged to change position and/or orientation and/or tilt when hose or bag is inflated or deflated.

This further stiffening element may intentionally be exposed to the air flow different to the (afore-mentioned) stiffening element. Thereby, for other portions of the spoiler less rigid material may be utilized without negatively influencing the performance of the spoiler.

According to an embodiment of the present invention, it is provided a rotor blade of a wind turbine, comprising a blade airfoil surface; and an adaptable spoiler according to one of the preceding embodiments installed at the blade airfoil surface, in particular a front portion of a suction surface.

The rotor blade may further comprise a hydraulic or pneumatic system adapted for inflating or deflating the hose or bag in order to adapt the state of the spoiler.

According to an embodiment of the present invention, the rotor blade further comprises a flow regulating device, in particular comprising at least one vortex generator, installed at the blade airfoil surface downstream the spoiler, wherein depending on a state of the adaptable spoiler, the effect of the flow regulating device on the air flow is changed.

Thereby, embodiments of the present invention provide different design realizations of a (in particular adaptable) spoiler. Generally, the spoiler comprises an internal stiffening element which allows the spoiler to be retracted quicker and may avoid the loss of stiffness in time due to creep of the material (in particular of the main body). Thus, the stiffening element may be manufactured from a material, which is more enduring (regarding rigidity and integrity) than the material the main body is composed of.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

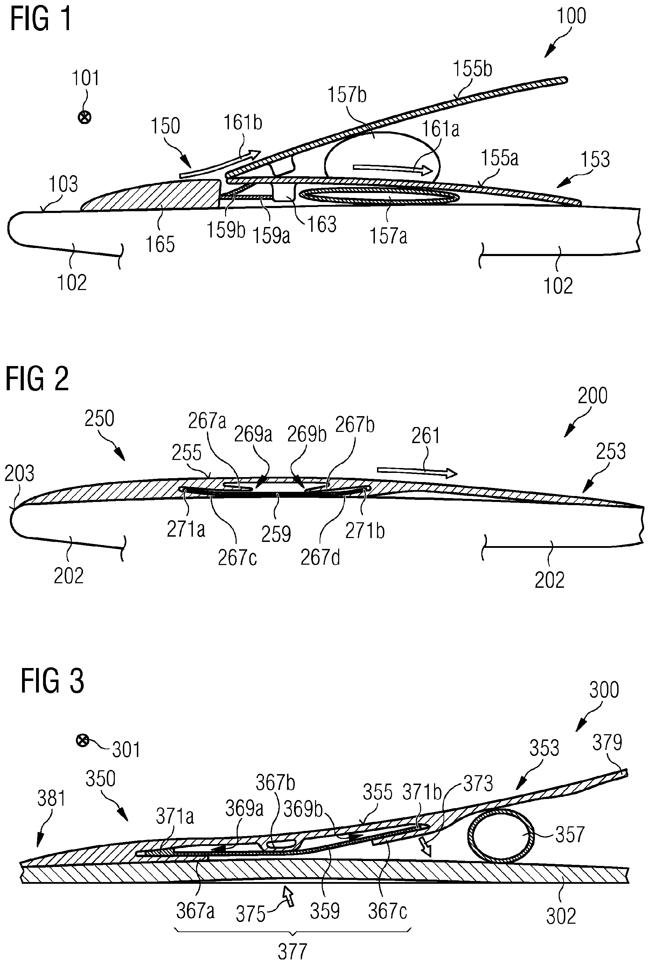

Figs. 1 to 10 schematically illustrate, in side sectional views, (portions of) rotor blades according to different embodiments of the present invention including an adaptable spoiler according to different embodiments of the present invention.

### Detailed Description

Elements similar in structure and/or function are labelled with reference signs differing only in the first digit.

The rotor blade 100 schematically (and partially) illustrated in Fig. 1 in a side sectional view looking along the longitudinal axis 101 of the rotor blade 100 (corresponding to the longitudinal direction of the spoiler 150) comprises a blade airfoil surface 103, in particular on a suction surface which is exposed to air flow during operation of the rotor blade 100. The rotor blade 100 further comprises an adaptable spoiler 150 which is installed at the blade airfoil surface 103, in particular in a front portion of a suction surface of the rotor blade 100. The adaptable spoiler may e.g. arranged in locations between 25% and 60%, most preferably between 30% and 45% of the front portion of the blade. The rotor blade 100 comprises a main body 102 having the airfoil shaped surface 103.

In Figs. 1 to 10, only a front portion of the respective rotor blade is illustrated, where the respective spoiler is installed. The rotor blade may extend further downstream to comprise for example a rear trailing edge portion at which for example a vortex generator is installed. Adaptation of the spoilers illustrated in Figs. 1 to 10 allow to change the effect of the vortex generator, which may by installed downstream the respective spoiler, for example at a trailing edge or close to a trailing edge of the rotor blade.

In Fig. 1, the spoiler 150 is illustrated in two different states, namely in a retracted (or inactivated) state and an extended (or activated) state. The retracted or inactive state is labeled with reference signs ending with the letter "a" and the extended or active state is labeled with reference signs ending with the letter "b".

The spoiler 150 comprises a main body 153 which comprises an airfoil shaped surface 155 (illustrated are the configurations of the airfoil shaped surface in the retracted state 155a and the extended or active state labeled with reference sign 155b. For enabling different states of the adaptable spoiler 150, the adaptable spoiler 150 comprises a hose 157, which can be in a deflated state 157a, to achieve the inactive or retracted state of the airfoil surface 155a. Furthermore, the bag 157 can be inflated (for example by a hydraulic or pneumatic apparatus) to adopt an inflated state 157b causing the tilting up of the airfoil shaped surface to adopt the configuration labeled with reference sign 155b.

The adaptable spoiler 150 further comprises at least one stiffening element 159 (in configuration 159a, 159b), which is distinct from the main body 153 and which is supporting the airfoil surface 155 in the configuration 155a as well as in the configuration 155b. When in the retracted state, an air flow 161a is established close or near the airfoil surface 155a, when in the extended state an air flow 161b is established.

As can be taken from Fig. 1, the stiffening element 159a, 159b is not exposed to the air flow 161a or 161b in the different states of the adaptable spoiler 150. When changing from the retracted state to the extended state of the spoiler 150, the stiffening element bends to change the configuration 159a to the configuration 159b having a slightly curved shape, while in the configuration 159a the stiffening element has a shape of a plane or is bent (curved) to better follow (or support) the airfoil geometry.

As can also be taken from Fig. 1, the stiffening element 159 (in particular in the configurations 159a, 159b) is installed in the main body 153 below the airfoil surface 155a, 155b in the different configurations.

The main body 153 may comprise one or more plastic pieces. In the embodiment 150 illustrated in Fig. 1, the main body 153 comprises an attachment point 163 having a larger thickness than the airfoil shaped surface portion 155. The stiffening element connects a front portion 165 of the spoiler 150 with the attachment point 163 thereby enforcing or stiffening the entire spoiler 150.

All spoilers according to embodiments of the present invention, which are illustrated in Figs. 1 to 10, may be configured as adaptable spoilers in which all may comprise a hose or a bag which may be inflated for changing the state of the spoiler similar to the embodiment as illustrated in Fig. 1.

Fig. 1 illustrates plastic pieces interconnected with a stiffening element.

The rotor blade 200 illustrated in Fig. 2 comprises a main body 202 having an airfoil shaped surface 203. The main body 253 of the spoiler 250 is integrally formed for example from plastic. The airfoil shaped surface 255 guides an air flow 261 during operation of the wind turbine close to the surface of the spoiler 250.

The main body 253 of the spoiler 250 illustrated in Fig. 2 comprises plural stiffening element contact portions 267a, 267b, 267c, 267d which all contact and/or hold the stiffening element 259 by force-fit or form-fit. In particular, the contact portions 267a and 267c form a slit 269a between them in which an edge 271a of the stiffening element 259 is inserted. Furthermore, the contact portions 267b and 267d form between them another slit 269b in which another end edge 271b of the stiffening element 259 is inserted, thereby, the stiffening element 259 is in particular hold at least partly by form-fit. In particular the slits may be angled in such a way, that the stiffening element has to be inserted with a "pre-bending" into the slits, such that when the spoiler is in its inactive position, there is a residual force pressing the spoiler against the blade, such that it does not lift off from the surface
Fig. 2 illustrates a single plastic piece with integrated prebent stiffening element.

Fig. 3 schematically illustrates a (portion of a) wind turbine blade 300 according to a further embodiment of the present invention including an adaptable spoiler 350 according to another embodiment of the present invention, wherein in Fig. 3 the spoiler 350 is illustrated in an extended state in which the bag 357 is in a filled or pressurized state. The stiffening element 359 is supported by a contact region 367a close to an edge of the stiffening element from one side. Further, the stiffening element 359 is hold by a contact portion 367b from another side of the stiffening element and from a still further contact portion 367c from the side at which also the contact portion 367a contacts the stiffening element 359. Thus, the three contact portions 367a,b,c of the main body 353 of the spoiler 350 are separated from each other and clamp the stiffening element 359 from two different sides.

The (elastic) stiffening element 359 exerts, below the surface 355, a force in a direction 373 away from the airfoil surface 355 to the two contact portions 367a and 367c and exerts a force in a direction 375 towards the airfoil surface 355 to the contact portions 367b which is arranged between the two contact portions 367a, 367c.

In the embodiment illustrated in Fig. 3, the stiffening element 359 is located in a central region 377 of the spoiler 350 away from the rear end 379 and away from the front end 381 of the spoiler.

Fig. 3 illustrates a single plastic piece, three point support for an integrated stiffening element.

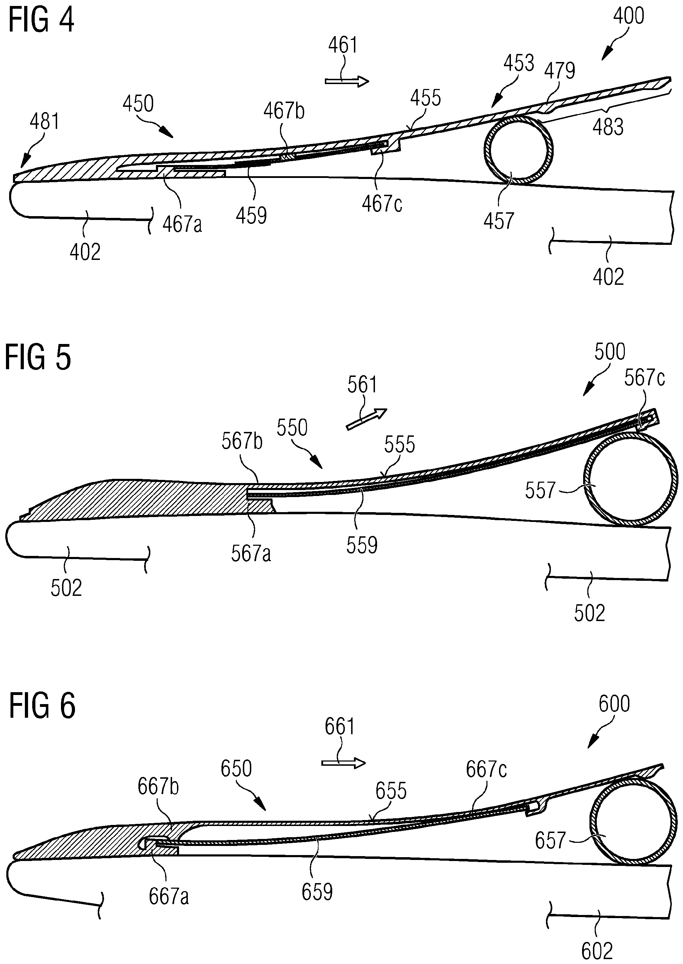

Fig. 4 schematically illustrates a (portion of a) rotor blade 400 according to a further embodiment of the present invention comprising an adaptable spoiler 450 according to a still further embodiment of the present invention. Again, the stiffening element 459 is hold or supported at the main body 453 by three contact regions of the main body, namely the contact regions 467a, 467b, 467c. Different from the embodiment of the spoiler 350 illustrated in Fig. 3, the spoiler 450 illustrated in Fig. 4 includes a rear end extension 483 extending the spoiler 450 at a rear end 479.

Fig. 4 illustrates a single plastic piece, three point support for an integrated stiffening element, including a rear end extension to increase the deflection of the flow.

The contact portions 367a, 367b, 367c of the embodiment 350 of the spoiler and the contact portions 467a, 467b and 467c of the embodiment 450 of the spoiler comprise protruding structures.

The spoiler 550 of the wind turbine blade 500 illustrated in a schematic manner in Fig. 5, comprises the stiffening element 559 which is supported also at three contact regions 567a, 567b and 567c. The first and second contact portions 567a, 567b form a slit clamping an upstream edge or portion of the stiffening element 559. The third contact portion 567c comprises a nose onto which a downstream edge or portion of the stiffening element 559 presses, in particular against a force exerted by the hose 567 located below the nose 567c. The downstream edge or portion of the stiffening element 559 can slide relative to the third contact portion 567c upon inflating or deflating the hose 557.

Fig. 5 illustrates a single plastic piece acting as a cover and fully supporting the stiffening element.

The embodiment of the spoiler 650 installed at the wind turbine blade 600 illustrated in Fig. 6, comprises two contact portions 667a, 667b close to each other in a front portion of the spoiler contacting the stiffening element 659 from opposite sides and further comprises a contact portion 667c established on a backside of the airfoil shaped surface 655. The bag or hose 657 is arranged downstream the contact portion 667c. The stiffening element 659 may have a thickness decreasing in the direction of the air flow 661 (corresponding to chord-wise direction).

Fig. 6 illustrates a single plastic piece with rotational support on both ends, but with freedom for sliding between the stiffening element and the plastic piece. Fig. 6 shows a preferred embodiment.

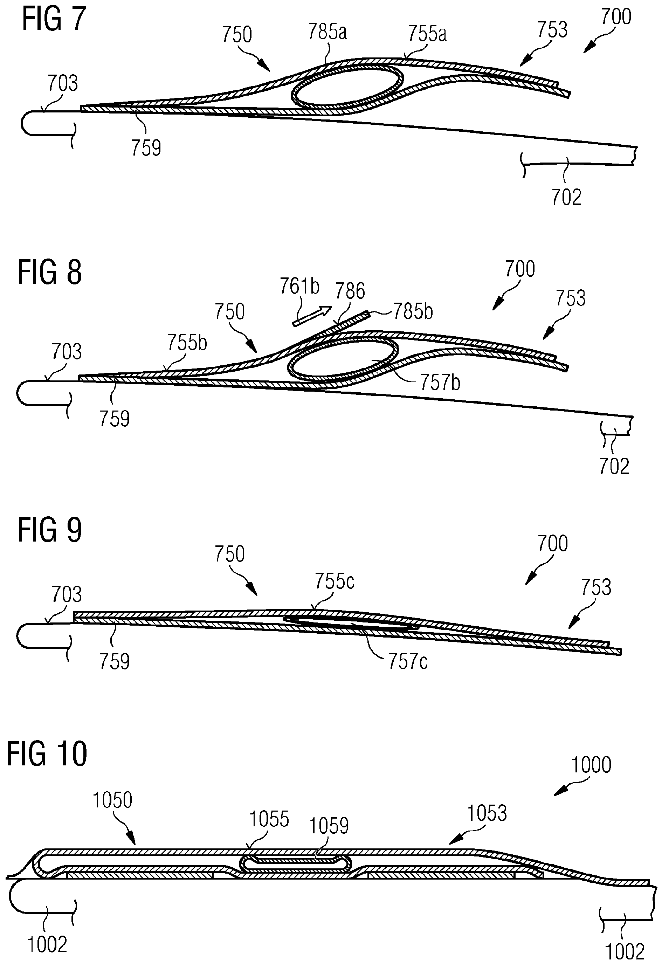

Figs. 7 to 9 schematically illustrate a wind turbine blade 700 including an adaptable spoiler 750 in different states 750a, 750b, 750c corresponding to different activation states. Thereby, the Fig. 9 illustrates the deactivated state 750c. The spoiler 750 comprises a stiffening element 759 and a further stiffening element 785 with surface 786 which is exposed to the air flow 761. In particular, the further stiffening element 785 is in different position and/or orientation or tilt when the hose or bag 757 is in different inflation states as indicated with reference signs 757a, 757b, 757c. Furthermore, the spoiler 750 comprises a stiffening plate 759 in a front portion of the spoiler being installed within the main body 753 of the spoiler.

Figs. 7 to 9 illustrate two stiffening elements and no plastic element.

The rotor blade 1000 schematically illustrated in Fig. 10 comprises a stiffening element 1059 buried within a main body 1053 of a spoiler 1050.. Fig. 10 illustrates one stiffening element bent to create a profile. The blade has an "indentation", the spoiler is made out of a single stiffening element which is bent into the required configuration.

Embodiments of the present invention may provide several benefits:
- High lifetime of spoiler for a high number of activation cycles,
- reduction of lift coefficient level when desired,
- increase of drag level when desired,
- fast power control,
- additional degree of freedom for control of aerodynamic forces on blades.

Embodiments may be applied to at least one of the following:
- Selective reduction of loading at different positions along the spanwise direction at different wind speeds,
- increase of aerodynamic damping at high wind speeds, or when else required
- reduction of aerodynamic loading during over-speed situations,
- reduction of aerodynamic loading during idling,
- reduction of aerodynamic loading during manual, emergency, or normal shutdown events,
- reducing pitch activity by combination of pitching and activation of the flow-regulating device,
- activation of spoiler in combination with individual pitch control.

There are a number of possible activations:
- Activation depending on the rotor speed of the turbine
- Slow activation (for example depending only on wind speed),
- Fast activation (for example 1P or 3P for a combination with IPC)
- on/off activation (for example for over-speed, shutdown events, events with extreme high turbulence),
- persistent activation (for example for idling),
- independent activation of different spoiler sections on the blade
- Independent activation of different spoiler sections on the blade to maintain the rotor speed at the nominal level

Possible pressure supply system characteristics include the following:
- activation by means of a pressurized fluid, in particular pressurized air, pressurized dry air, or any other gas such as inert gases (e.g. nitrogen or helium)
- low required volume of air (achieved for example by controlling a change of shape in the pressurized chamber, rather than an expansion of the chamber),
- pressurized reservoirs close to the points of activation (for rapid response and reduction of power requirements for the supply system). This can be done for example by placement of tubes of larger diameter internally in the blade close to the pressure supply points,
- simultaneous connection to pressure and vacuum chambers to increase response speed,
- constant flow through a purge valve to avoid accumulation of humidity/dirt/compression oil, etc.
- use of pre-heated air in case icing could be an issue,
- independent activation of different radial segments,
- use of control valves at particular stations to avoid/permit flow of pressurized air from one radial position to a further radial position,
- use of pneumatically activated pneumatic valves (to avoid electrical signals),
- use of stagnation pressure at some radial station as input to pneumatic control valves,
- use pitch position as input to pneumatic control valves (for example high pitch position file open valves and thus activate the spoiler),
- Use the rotor speed as input to pneumatic control valves (for example high rotor speed may lead to opening of valves and thus activation of the spoiler),
- Use of turbulence level as input to pneumatic control valves.

In the flow spoiler there may be no need for an electrical or mechanical component.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Spoiler (150), in particular adaptable spoiler, for a wind turbine blade (100), comprising:
a main body (153) comprising an airfoil shaped surface (155) to be exposed to air flow (161);
at least one stiffening element (159) distinct from the main body and supporting the airfoil shaped surface,
wherein the stiffening element (159) is in particular configured to enforce the shape of the airfoil surface (155), in particular during loading due to wind during operation of the wind turbine.

2. Spoiler according to the preceding claim, wherein the stiffening element (159) is not exposed to an air flow (161) the rotor blade (100) is subjected to,
wherein the stiffening element has decreasing thickness from upstream to downstream in an air flow direction.

3. Spoiler according to one of the preceding claims, wherein the stiffening element (159) is elastic and/or prebent and/or has a shape of a plane or a curved shape different from a plane.

4. Spoiler according to one of the preceding claims,
wherein the stiffening element (159) is installed in the main body below the airfoil shaped surface, and/or
the stiffening element (1059) is installed buried in the main body (1053).

5. Spoiler according to one of the preceding claims, wherein the main body (153) comprises a single piece or several pieces comprising plastic and/or thermoplastic material and/or thermoset material, in particular fibre enforced.

6. Spoiler according to one of the preceding claims, wherein the main body (253) comprises plural stiffening element contact portions (267a,b,c,d) contacting and/or holding the stiffening element by force-fit and/or form-fit, in particular in a biased manner.

7. Spoiler according to one of the preceding claims, wherein the contact portions comprise a first, a second and a third contact portion (367a,b,c), the third contact portion separated from the first and second contact portion to be downstream in an air flow direction, each in particular extending in the longitudinal direction (301) of the blade to a larger extent than perpendicular thereto,
wherein the contact portions are in particular continuous along a longitudinal direction of the spoiler.

8. Spoiler according to one of the preceding claims, wherein the first and the second contact portion (567a, 567b) fixedly clamp an upstream portion of the stiffening element, wherein a downstream contact portion of the stiffening element presses to the third contact portion (567c) in a direction against a force exerted on the airfoil shaped surface by an expandable device.

9. Spoiler according to one of the preceding claims, wherein the first and second contact portions (367a,c) are each part of a respective slit (369a,b) in the main body into which a respective upstream end edge (371a,b) of the stiffening element (359) is at least partially inserted, thereby holding the stiffening element partly by form-fit, and/or
wherein the third contact portion is arranged to allow sliding of the downstream contact portion of the stiffening element relative to the third contact portion of the main body upon inflating or deflating the expandable device,
wherein in particular the third contact portion and/or the downstream contact portion of the stiffening element and/or at least a portion of an outer surface of the expandable device comprises low friction elements, in particular stripes.

10. Spoiler according to one of the preceding claims, wherein the stiffening element (359) is located:
in a central region (377) of the airfoil surface away from the rear end (379) and the front end (381) of the spoiler (350), or
in at least a half or a rear end portion of the spoiler.

11. Spoiler according to one of the preceding claims, wherein the stiffening element (159) comprises a composite and/or laminate comprising:
a fibre material and thermoplastic and/or thermosetting material,
the fibre material in particular comprising at least one of: glass fibre and/or carbon fibre and/or Kevlar and/or natural fibre,
the thermoplastic and/or thermosetting material in particular comprising at least one of: epoxy, polyester, vinylester, resin any other suitable thermosetting resin, POM, Polyamid, ABS, ASA, SAN, PC, other suitable thermoplastic materials.

12. Spoiler according to one of the preceding claims, further comprising an expandable device, in particular a hose or a bag (157a,b), inflatable with air and arranged to change shape and/or tilt of the spoiler airfoil surface, thereby providing an adaptable spoiler.

13. Spoiler according to one of the preceding claims, further comprising:
a further stiffening element (785a,b,c), in particular exposed to the air flow and arranged to change position and/or orientation and/or tilt when hose or bag is inflated or deflated.

14. Rotor blade (100) of a wind turbine comprising:
a blade airfoil surface (101); and
at least one adaptable spoiler (150), in particular at least five spoiler sections, further in particular 8 to 30 spoiler sections, still further in particular 8 to 15 spoiler sections, according to one of the preceding claims installed at the blade airfoil surface (101), in particular a front portion of a suction surface,
wherein the spoiler sections are installed along the longitudinal direction of the blade airfoil surface,
wherein the spoilers can in particular be activated or deactivated independently.

15. Rotor blade according to the preceding claim, further comprising:
a flow regulating device, in particular comprising at least one vortex generator, installed at the blade airfoil surface downstream the spoiler, wherein depending on a state of the adaptable spoiler, the effect of the flow regulating device on the air flow is changed.
